# EUROPÄISCHE PATENTANMELDUNG

(11) **EP 4 755 714 A1**
(43) Veröffentlichungstag der Anmeldung: **10.06.2026**
(21) Anmeldenummer: 25221442.4
(22) Anmeldetag: 08.12.2025
(51) Int. Cl.: B60P 7/08, B60P 7/06, B65D 71/04

(54) **SPANNVORRICHTUNG**

(30) Priorität: 09.12.2024 DE 102024004138
(71) Anmelder: SpanSet secutex Sicherheitstechnik GmbH, 52511 Geilenkirchen (DE)
(72) Erfinder: Franke, Boris, 52525 Heinsberg (DE)
(74) Vertreter: Taubert, Diana

(57) **Zusammenfassung**

Die Erfindung betrifft eine Spannvorrichtung zum Arretieren von Ladung bei Transportmitteln, wie beispielhaft ein Zurrgurt sowie die Anordnung und ein Verfahren zur Arretierung einer solchen Vorrichtung, bestehend aus mindestens einem biegeschlaffen Anschlagmittel, mindestens zwei Verbindungsteilen, die jeweils an dem mindestens einen biegeschlaffen Anschlagmittel angeordnet sind und die Spannvorrichtung mindestens ein volumenveränderbares Ausdehnungselement aufweist.

## Beschreibung

Die Erfindung betrifft eine Spannvorrichtung zum Arretieren von Ladung bei Transportmitteln, wie beispielhaft ein Zurrgurt sowie die Anordnung und ein Verfahren zur Arretierung einer solchen Vorrichtung.

Spannvorrichtungen zum Arretieren von Ladung bei Transportmitteln sind seit langem bekannt. Gerade bei Zurrgurten zur Arretierung von Ladung mit einem hohen Gewicht im Schwerlastbereich ist das Aufbringen von hohen Vorspannkräften notwendig. Das Aufbringen der Vorspannkraft ist jedoch begrenzt durch die konstruktive Ausgestaltung eines jeweiligen Spannelements, so beispielhaft eine Ratsche oder ein Klemmschloss als Arretiervorrichtung.

In der Vergangenheit wurden daher unter anderem Arretiervorrichtungen mit einem Schneckengetriebe eingesetzt, die jedoch einer zusätzlichen Vorrichtung bedürfen, so einer Kurbel oder einer externen Einrichtung, wie einen Schrauber. Sofern eine Ratsche zum Einsatz kommt, ist es notwendig, eine solche mit einem verlängerten Betätigungshebel auszugestalten, was jedoch auch zu Problemen der Handhabe und räumlichen Anordnung der Ratsche führt. Bei der Anordnung an Fahrzeugen oder in Containern ist durch Aufbauten und Containerwände der Raum begrenzt, sodass eine Bedienung von Ratschen mit einem verlängerten Betätigungshebel oftmals erschwert ist. Daher ist die Hebellänge begrenzt.

Zudem ist durch die Art der Arretiervorrichtung, so der Ratsche, auch die Gestaltung der biegeschlaffen Anschlagmittel begrenzt, so beispielhaft die Breite und Dicke des Anschlagmittels. Im Schwerlastbereich ist es daher notwendig, zur Arretierung von Ladungen eine Mehrzahl von Spannvorrichtungen einzusetzen, um eine ausreichende Arretierung einer Ladung sicherzustellen.

Die Aufgabe der Erfindung besteht darin, eine Spannvorrichtung bereitzustellen, welche gegenüber dem Stand der Technik optimiert ist und eine verbesserte Zurrung ermöglicht, sodass eine höhere Vorspannkraft aufgebracht und damit eine höhere Vorspannung in Bezug auf zumindest ein Anschlagmittel gewährt werden kann.

Die Aufgabe wird erfüllt durch eine Spannvorrichtung mit den Merkmalen des Hauptanspruchs 1 und eine Anordnung einer solchen Spannvorrichtung zur Arretierung einer Ladung mit den Merkmalen der Ansprüche 12 oder 13 sowie ein Verfahren gemäß einer der Ansprüche 17 oder 18. Nähere Ausgestaltungen ergeben sich aus den Unteransprüchen.

Die Spannvorrichtung dient zur Arretierung einer Ladung, beispielhaft, aber nicht erfindungsbeschränkend im Schwerlastbereich, an einer Trennebene. Diese Trennebene kann jegliche Vorrichtung sein, an der eine Ladung bestimmungsgemäß anordenbar ist, so zum Beispiel ein Ladeboden, eine Ladewand, eine Palette, eine Ladeplatte oder eine Coilablage, wobei die Trennebene eine Oberseite und eine Unterseite aufweist und die Ladung an der Oberseite der Trennebene anordenbar ist. Es handelt sich somit um eine physische Trennebene. Als Trennebene kommen daher Ladungsträger als selbständige Elemente zur Aufnahme von Ladung in Betracht, wie beispielhaft die bereits erwähnten Paletten, als auch Transportmittel selbst, wie Fahrzeuge jeglicher Art und deren Teile, wie Land-, Luft-, Wasser- oder Weltraumfahrzeuge.

Die Spannvorrichtung besteht dabei aus mindestens einem biegeschlaffen Anschlagmittel, so beispielhaft aus mindestens einer Kette, einem Seil oder einem Gurtband und mindestens zwei Verbindungsteilen, wie zum Beispiel Haken, Ösen, Riegelelemente oder ähnliche dem Fachmann bekannte Elemente, die jeweils an dem mindestens einen biegeschaffen Anschlagmittel angeordnet sind, so beispielhaft an den freien Enden des mindestens einen biegeschlaffen Anschlagmittels. Erfindungsgemäß weist die Spannvorrichtung mindestens ein volumenveränderbares Ausdehnungselement auf, das zum Beispiel als ein regulierbares pneumatisches Element, wie beispielhaft ein Luftkissen, ausgestaltet sein kann, an dem das mindestens eine biegeschlaffe Anschlagmittel anordenbar ist.

Das mindestens eine biegeschlaffe Anschlagmittel und das mindestens eine volumenveränderbare Ausdehnungselement bilden dabei zwei separate Baugruppen und somit ein Set. Ein Set kann aus ein oder mehreren biegeschlaffen Anschlagmitteln bestehen, das beispielhaft an einem Ausdehnungselement anordenbar ist. Ebenfalls liegt es im Rahmen der Erfindung, dass ein Set aus einem biegeschlaffen Anschlagmittel besteht und ein oder mehrere volumenveränderbare Ausdehnungselemente aufweist. Nachfolgend wird der Einfachheit halber nicht stets von mindestens einem biegeschlaffen Anschlagmittel oder Ausdehnungselement gesprochen, obwohl dies im Sinne der Erfindung jeweils erfasst ist, auch wenn nur der Begriff "Anschlagmittel" oder "Ausdehnungselement" verwendet wird.

Als volumenveränderbares Ausdehnungselement kommen aber auch andere technische Vorrichtungen in Betracht, die geeignet sind, durch ihre Ausdehnung die Spannvorrichtung und damit das biegeschlaffe Anschlagmittel mit einer Vorspannkraft zu beaufschlagen, um so die Ladung normgerecht arretieren zu können.

Unter volumenveränderbar im Sinne der Erfindung ist gemeint, dass das Ausdehnungselement zumindest in eine Richtung expandieren kann, um bei der Expansion eine Kraft auf das biegeschlaffe Anschlagmittel aufbringen zu können, um so eine Vorspannkraft zu generieren oder zu verstärken. Daher kann als volumenveränderbares Ausdehnungselement auch ein hydraulisches Element, eine oder mehrere Hydraulikzylinder beinhaltend, oder ein mechanisches Element, so eine durch mechanische Elemente volumenveränderbare Vorrichtung in Betracht kommen, wie Hydraulikzylinder und/oder Hebelvorrichtungen oder vergleichbar wirkende Elemente.

Zusätzlich und somit optional kann die Spannvorrichtung ebenfalls eine Arretiervorrichtung aufweisen, welche jeweils an dem mindestens einen Anschlagmittel angeordnet ist, und wodurch die Länge des mindestens einen Anschlagmittels veränderbar ist. Hier kommen alle bekannten Vorrichtungen in Betracht, wie eine Ratsche, ein Klemmschloss oder ein verstellbarer Verschluss. Als Spannvorrichtung kommt daher auch ein bekannter Spanngurt in Betracht.

In einer Ausgestaltung der Erfindung ist das mindestens eine volumenveränderbare Ausdehnungselement ein regulierbares pneumatisches Element, so zum Beispiel ein volumenveränderbares Luftkissen, dessen Volumen durch eine Änderung dessen Innendrucks regulierbar ist. Eine Erhöhung des Innendrucks führt zu einer Volumenvergrößerung und eine Verringerung des Innendrucks führt zu einer Volumenreduzierung des mindestens einen volumenveränderbaren Ausdehnungselements in der Form eines pneumatischen Elements.

Dabei kann erfindungsgemäß vorgesehen sein, dass das mindestens eine volumenveränderbare Ausdehnungselement an dem mindestens einen biegeschlaffen Anschlagmittel lastseitig angeordnet werden kann. Andere Anordnungen des mindestens einen volumenveränderbaren Ausdehnungselements werden innerhalb der weiteren Beschreibung ergänzend beschrieben.

Bei funktionsgemäßer Anordnung der Spannvorrichtung an eine Ladung ist es so möglich, mittels des mindestens einen volumenveränderbaren Ausdehnungselements die Spannvorrichtung mit einer Vorspannkraft zu beaufschlagen, um die Ladung zu arretieren. Sofern die Spannvorrichtung eine Arretiervorrichtung aufweist, kann mit der Arretiervorrichtung entweder eine bloße Festlegung oder bereits eine gewisse Vorspannung aufgebracht, aber durch das erfindungsgemäße mindestens eine volumenveränderbare Ausdehnungselement erzeugt, vergrößert bzw. nachjustiert werden, so beispielhaft nachgespannt werden.

In einer Ausgestaltung ist das mindestens eine volumenveränderbare Ausdehnungselement ein Luftkissen, das eine Vorrichtung zum Erhöhen oder zum Reduzieren des Luftkisseninnendrucks aufweist, beispielhaft eine Handpumpe mit einem Ventil, und das ein Schlaufenelement zur lastseitigen Anordnung des Ausdehnungselements an dem mindestens einen biegeschlaffen Anschlagmittel aufweist. Schlaufenelement im Sinne der Erfindung ist jedes Element zum Anordnen des mindestens einen volumenveränderbaren Ausdehnungselements an dem mindestens einen biegenschaffen Anschlagmittel, so an dem beispielhaften Gurtband, der Spannvorrichtung. Vorzugsweise ist die Anordnung beweglich und/oder reversibel, beispielhaft beweglich in Längserstreckung des mindestens einen biegeschlaffen Anschlagmittels. Sofern die Anordnung reversibel ist, kann das Schlaufenelement bekannte Elemente, wie einen Klettverschluss, Knöpfe oder Druckknöpfe aufweisen, mit denen das Schlaufenelement von dem mindestens einen volumenveränderbaren Ausdehnungselement ganz oder teilweise lösbar ist. Das Schlaufenelement kann ähnlich einer Gürtelschlaufe ausgestaltet sein.

Das mindestens eine Ausdehnungselement kann dabei bei funktionsgemäßer Anordnung der Spannvorrichtung an einer Ladung lastseitig an der Arretiervorrichtung anliegen. Dies gewährleistet eine Polsterung der Ladung durch das mindestens eine volumenveränderbare Ausdehnungselement, wenn es ein Luftkissen ist, um die Ladung vor der in aller Regel starren Arretiervorrichtung, die oftmals scharfe Kanten aufweist, zu schützen. Zudem kann durch diese Anordnung auch ein leichtes Nachspannen der Spannvorrichtung ermöglicht werden. Das Vorspannen der Spannvorrichtung erfolgt bei Vorhandensein durch das Arretierelement zum Beispiel als Ratsche oder Gurtschloss. Das Nachspannen erfolgt sodann unmittelbar im Bereich der Arretiervorrichtung durch Aufpumpen des Luftkissens. So ist auch eine optische Prüfung der Funktionsweise der Arretiervorrichtung beim Aufpumpen möglich, so ob ein Verschluss, zum Beispiel ein Gurtschloss, seine Arretierung beibehält.

Ebenfalls kann vorgesehen sein, dass das mindestens eine volumenveränderbare Ausdehnungselement ein expansionsfähiges, so beispielhaft ein volumenveränderbares, Kernelement, so beispielhaft ein Luftkissen, mindestens einen Hydraulikzylinder oder eine mechanische Vorrichtung aufweist, das von einem Gehäuse, so einer separaten Hülle, umgeben ist, was zur Sicherung des mindestens einen volumenveränderbaren Ausdehnungselements dient und besonders zur Sicherung von leicht zu beschädigenden Luftkissen dient.

Dabei kann das Gehäuse ineinandergreifende und relativ zueinander verschiebbare Gehäuseelemente aufweisen. In Betracht kommen beispielhaft starre Profile, zum Beispiel U-Profile, die ineinandergreifen und relativ zueinander verschiebbar sind - in der Höhe, z. B. orthogonal zu ihrer Längserstreckung, um bei Expansion unter Zusammenwirkung mit der an der Oberseite angeordneten Ladung eine Kraft auf das biegeschlaffe Anschlagmittel aufbringen zu können, um so eine Vorspannkraft zu generieren oder zu verstärken. Das Gehäuse kann aus jedem dem Fachmann bekannten und von ihm als geeignet gehaltenem Material gefertigt sein, so beispielsweise aus Metall oder Kunststoff.

Ebenfalls kann vorgesehen sein, dass das Gehäuse außenseitig eine dem Fachmann bekannte rutschhemmende Beschichtung aufweist, um eine verbesserte Arretierung des volumenveränderbaren Ausdehnungselements zu gewähren, wenn dieses an Flächen, so zum Beispiel auch der Trennebene anliegt.

In einer weiteren Ausgestaltung ist vorgesehen, dass das mindestens eine Ausdehnungselement balkenartig ausgebildet ist, um die Ladung unterhalb der Trennebene und/oder die Trennebene bei funktionsgemäßer Anordnung zu überragen.

Des Weiteren kann das mindestens eine volumenveränderbare Ausdehnungselement mindestens zwei Anschlagpunkte aufweisen, um das mindestens eine biegeschlaffe Anschlagmittel an die Anschlagpunkte anschlagen zu können. Es kommt dabei in Betracht, dass mindestens ein Anschlagpunkt an dem mindestens einen volumenveränderbaren Ausdehnungselement im Bereich von freien Enden angeordnet ist, sodass das mindestens eine biegeschlaffe Anschlagmittel dort leicht angeschlagen und somit arretiert werden kann.

Weitergehend werden weitere Möglichkeiten der Anordnung der erfindungsgemäßen Spannvorrichtung zur Arretierung der Ladung an der physischen Trennebene beschrieben, wobei die Ladung an der Oberseite der Trennebene angeordnet ist.

Dabei arretiert in einer zweiten Variante das mindestens eine biegeschlaffe Anschlagmittel mit der optionalen Arretiervorrichtung und den Verbindungsteilen die Ladung an der Oberseite der Trennebene. Das mindestens eine biegeschlaffe Anschlagmittel kann an der Trennebene zum Beispiel oder aber auch an einer oder mehreren der Trennebene angrenzenden Flächen eines Transportmittels und/oder an der Ladung angeschlagen sein und so die Ladung an der Trennebene arretieren und damit fixieren. Dabei ist das mindestens eine volumenveränderbare Ausdehnungselement an der Oberseite der Trennebene und der Ladung angeordnet oder das mindestens eine volumenveränderbare Ausdehnungselement ist an dem mindestens einen biegeschlaffen Anschlagmittel und der Ladung derart angeordnet, dass das funktionsgemäß an der Ladung angeordnete mindestens eine biegeschlaffe Anschlagmittel durch eine Expansion, worunter auch eine Volumenvergrößerung fällt, des mindestens einen Ausdehnungselements mit einer Vorspannkraft beaufschlagt werden kann oder die durch die Arretiervorrichtung aufgebrachte Vorspannkraft dadurch erhöht werden kann.

In einer weiteren Variante arretiert das mindestens eine biegeschlaffe Anschlagmittel mit der optionalen Arretiervorrichtung und den Verbindungsteilen die Ladung an der Oberseite der Trennebene und das mindestens eine volumenveränderbare Ausdehnungselement ist an der Unterseite der Trennebene angeordnet. Das mindestens eine biegeschlaffe Anschlagmittel ist unterhalb der Trennebene an dem Transportmittel oder an dem mindestens einen volumenveränderbaren Ausdehnungselement selbst derart angeschlagen, dass das funktionsgemäß an der Ladung angeordnete mindestens eine biegeschlaffe Anschlagmittel durch eine Expansion, worunter auch eine Volumenvergrößerung fällt, des mindestens einen Ausdehnungselements mit einer Vorspannkraft beaufschlagt werden kann oder die durch die Arretiervorrichtung aufgebrachte Vorspannkraft so erhöht werden kann. Dabei gewährt die physische Trennebene an der Oberseite eine Auflagefläche der Ladung und an der Unterseite eine Anlagefläche des mindestens einen volumenveränderbaren Ausdehnungselements.

In der weiteren Variante der Anordnung kann vorgesehen sein, dass das mindestens eine biegeschlaffe Anschlagmittel an freien Enden des mindestens einen volumenveränderbaren Ausdehnungselements an diesem angeschlagen ist.

Auch kann in der weiteren Variante vorgesehen sein, dass das mindestens eine volumenveränderbare Ausdehnungselement die Ladung unterhalb der Trennebene oder unterhalb des Ladebodens überragt und das mindestens eine biegeschlaffe Anschlagmittel an überragenden Bereichen des mindestens einen volumenveränderbaren Ausdehnungselements an diesem angeschlagen ist.

Für die Anordnung der vorgeschriebenen Spannvorrichtung zur Arretierung einer Ladung an einer physischen Trennebene, wobei die Ladung an der Oberseite der Trennebene angeordnet ist, sind verschiedene Verfahren vorgesehen.

Ein erstes Verfahren ist wie folgt ausgestaltet. Zuerst wird das mindestens eine biegeschlaffe Anschlagmittel mit der Ladung in Wirkverbindung gebracht, sodass das mindestens eine biegeschlaffe Anschlagmittel mit der optionalen Arretiervorrichtung und den Verbindungsteilen die Ladung an der Oberseite der Trennebene arretieren kann. Das mindestens eine biegeschlaffe Anschlagmittel wird dabei an der Oberseite der Trennebene oder an einer oder mehreren der Trennebene angrenzenden Flächen angeschlagen.

Das mindestens eine volumenveränderbare Ausdehnungselement wird vor oder nach dem ersten Schritt zwischen der Oberseite der Trennebene und der Ladung angeordnet oder das mindestens eine volumenveränderbare Ausdehnungselement wird zwischen dem mindestens einen biegeschlaffen Anschlagmittel und der Ladung angeordnet. Sodann wird das mindestens eine volumenveränderbare Ausdehnungselement betätigt, sodass es expandiert, zum Beispiel sich dessen Volumen vergrößert, und es dadurch auf das mindestens eine biegeschlaffe Anschlagmittel eine Kraftwirkung ausübt und so eine Vorspannung des mindestens einen biegeschlaffen Anschlagmittels erzeugt oder erhöht wird.

Ein zweites Verfahren umfasst folgende Schritte. Zuerst wird das mindestens eine biegeschlaffe Anschlagmittel mit der Ladung in Wirkverbindung gebracht, sodass das mindestens eine biegeschlaffe Anschlagmittel mit der optionalen Arretiervorrichtung und den Verbindungsteilen die Ladung an der Oberseite der Trennebene im weiteren Verfahrensverlauf arretieren kann. In der Regel wird das mindestens eine biegeschlaffe Anschlagmittel über die Last gelegt.

Das mindestens eine volumenveränderbare Ausdehnungselement wird vor oder nach dem ersten Schritt an der Unterseite der Trennebene angeordnet. Sodann wird das mindestens eine biegeschlaffe Anschlagmittel unterhalb der Trennebene an dem Transportmittel oder an dem mindestens einen volumenveränderbaren Ausdehnungselement angeschlagen.

Danach wird die Ladung mit dem mindestens einen Anschlagmittel arretiert und das mindestens eine volumenveränderbare Ausdehnungselement wird betätigt, sodass es expandiert, zum Beispiel sich dessen Volumen vergrößert und dadurch auf das mindestens eine biegeschlaffe Anschlagmittel eine Kraftwirkung ausgeübt wird und so eine Vorspannung des mindestens einen biegeschlaffen Anschlagmittels erzeugt oder erhöht wird. Dies erfolgt stets mittelbar durch das mindestens eine volumenveränderbare Ausdehnungselement, wenn dieses nicht direkt an dem mindestens einen biegeschlaffen Anschlagmittel anliegt und mit ihm direkt in Wirkverbindung steht.

Durch die erfindungsgemäße Vorrichtung, die Anordnung derselben und das Verfahren ist es möglich, eine Ladung optimierter zu arretieren, so zu verzurren, sodass eine höhere Vorspannkraft je Anschlagmittel bereitgestellt werden kann, die durch eine übliche Ratsche mit Betätigungshebel nicht oder nur sehr schwer aufgebracht werden kann.

Die Vorrichtung und Anordnung ermöglichen einen erweiterten Einsatzbereich von biegeschlaffen Anschlagmitteln, die selbst beispielsweise keine Spannvorrichtung mehr aufweisen müssen, da das Ausdehnungselement die Gewährleistung der Vorspannung bereits allein übernehmen kann. In diesem Fall wäre es auch möglich, biegeschlaffe Anschlagmittel so zu dimensionieren, dass eine höhere Lashing Capacity (LC) gegeben ist. Dies ermöglicht sodann auch, die Anzahl der biegeschlaffen Anschlagmittel pro Schwerlastladegut zu reduzieren.

Die Erfindung wird nachfolgend anhand von fünf Ausführungsbeispielen unter Bezugnahme auf die Figuren weiter erläutert. Dabei ergeben sich weitere Vorteile, Merkmale und Ausgestaltungen der Erfindung.

Es zeigen:
**Fig. 1** eine erfindungsgemäße Spannvorrichtung mit einer Arretiervorrichtung und mit einem Ausdehnungselement,
**Fig. 2** eine Anordnung der erfindungsgemäßen Spannvorrichtung mit dem Ausdehnungselement in einer Variante,
**Fig. 3** eine Anordnung der erfindungsgemäßen Spannvorrichtung mit dem Ausdehnungselement in einer weiteren Variante,
**Fig. 4** eine Anordnung der erfindungsgemäßen Spannvorrichtung mit dem Ausdehnungselement in einer weiteren Variante,
**Fig. 5** eine Variante der Anordnung der erfindungsgemäßen Spannvorrichtung mit dem Ausdehnungselement, wie sie bereits in **Fig. 2** dargestellt ist, jedoch in einer davon abgewandelten Variante,
**Fig. 6** eine beispielhafte Anordnung eines volumenveränderbaren Ausdehnungselements an einem biegeschlaffen Anschlagmittel im Bereich einer Arretiervorrichtung.

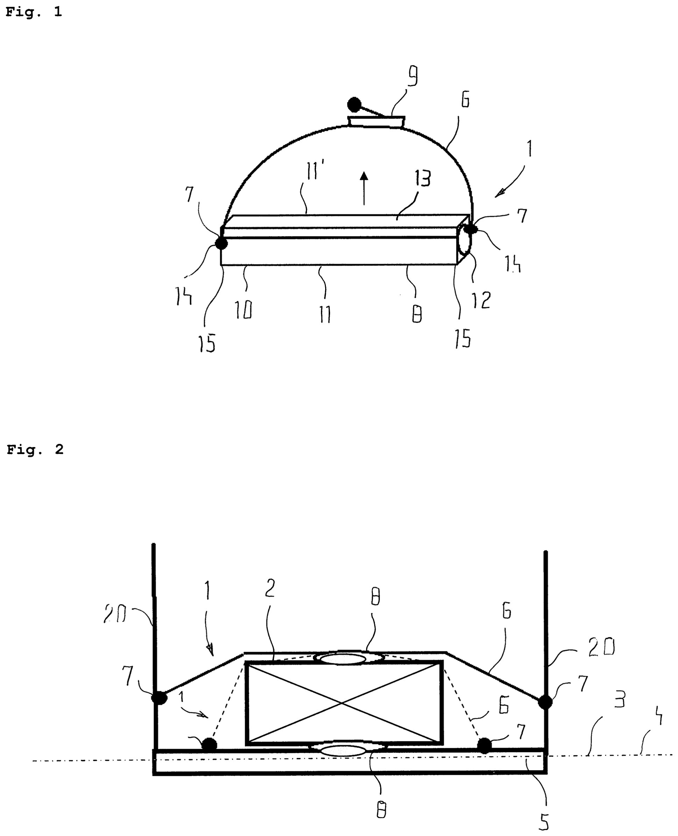

In **Fig. 1** ist eine erfindungsgemäße Spannvorrichtung **1** schematisch dargestellt und zwar in einem zusammengesetzten Zustand als Set, das aus zwei separaten Baugruppen besteht, so einem biegeschlaffen Anschlagmittel **6** in Form eines Spanngurts und einem volumenveränderbaren Ausdehnungselement **8** als zweite Baugruppe. Das biegeschlaffe Anschlagmittel **6** ist an freien Enden **15** des Ausdehnungselements **8** angeordnet, wobei das Anschlagmittel **6** von dem Ausdehnungselement **8** abgenommen werden kann. **Fig. 1** soll nur das Zusammenwirken der beiden Baugruppen schematisch darstellen.

Die Spannvorrichtung **1** besteht dabei aus einem biegeschlaffen Anschlagmittel **6,** im Ausführungsbeispiel ein Gurtband mit zwei lösbaren Verbindungsteilen **7,** im Ausführungsbeispiel Hakenelemente, die jeweils an dem biegeschlaffen Anschlagmittel **6** angeordnet sind, nämlich an freien Enden **15** des Anschlagmittels **6.** Das volumenveränderbare Ausdehnungselement **8** ist im Ausführungsbeispiel als ein regulierbares pneumatisches Element ausgestaltet. Es ist balkenartig ausgebildet und besteht aus einem expansionsfähigen, volumenveränderbaren Kernelement **12,** ein Luftkissen **17,** das von einem Gehäuse **10** als Hülle umgeben ist, was als Schutz vor Beschädigungen dient. Das Gehäuse **10** besitzt ineinandergreifende und relativ zueinander verschiebbare Gehäuseelemente **11, 11'** in Form von U-Profilen, die ineinandergreifen und relativ zueinander in der Höhe verschiebbar sind, so orthogonal zu ihrer Längserstreckung des balkenartigen Ausdehnungselements **8.** Zudem weist es eine rutschhemmende Beschichtung **13** auf.

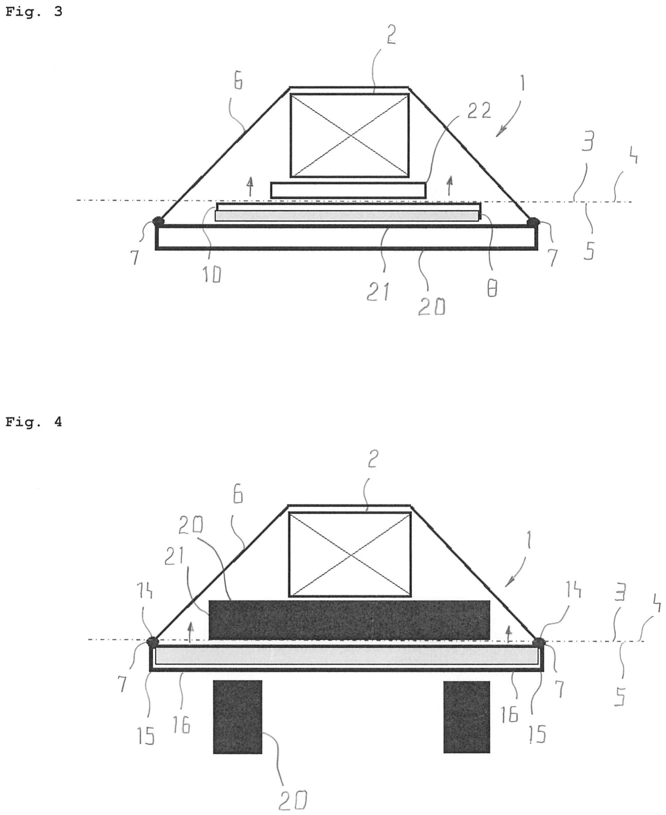

Die **Fig. 2** bis **6** stellen schematisch Beispiele der Anordnung der erfindungsgemäßen Spannvorrichtung **1** beziehungsweise der Anordnung des volumenveränderbaren Ausdehnungselements **8** dar. In **Fig. 2** sind dabei zwei Varianten der Anordnung enthalten, wobei zwei Ausdehnungselemente **8** in **Fig. 2** in zwei Varianten oberhalb der Trennebene **3** angeordnet sind und in **Fig. 3** und **4** das jeweilige volumenveränderbare Ausdehnungselement **8** in zwei Varianten unterhalb der Trennebene **3** angeordnet ist.

Dabei arretiert in der Variante nach **Fig. 2** ein biegeschlaffes Anschlagmittel **6** mit Verbindungsteilen **7** die Ladung an der Oberseite der Trennebene **3.**

Das biegeschlaffe Anschlagmittel **6** ist in der Variante mit gestrichelter Linie an der Trennebene **3,** im Ausführungsbeispiel ein Ladeboden **21** des einen Transportmittels **20** angeschlagen und in einer zweiten Variante mit durchgezogener Linie des Anschlagmittels **6** an mehreren der Trennebene **3** angrenzenden Flächen des Transportmittels **20.** Es kann so die Ladung **2** an der Trennebene **3** am Ladeboden **21** arretieren und damit fixieren. Dabei ist ein erstes volumenveränderbares Ausdehnungselement **8** an der Oberseite **4** der Trennebene **3** und der Ladung **2,** also zwischen Ladeboden **21** und der Ladung **2,** angeordnet und ein zweites volumenveränderbares Ausdehnungselement **8** ist an dem biegeschlaffen Anschlagmittel **6** und der Ladung **2** derart angeordnet, dass das funktionsgemäß an der Ladung **2** angeordnete biegeschlaffe Anschlagmittel **6** durch eine Expansion, im Ausführungsbeispiel eine Volumenvergrößerung, der beiden Ausdehnungselemente **8** mit einer Vorspannkraft beaufschlagt werden kann.

**Fig. 3** und **4** stellen zwei weitere Varianten der Anordnung dar, wobei in diesen das biegeschlaffe Anschlagmittel **6** mit der optionalen Arretiervorrichtung **9,** die nicht abgebildet ist, und den Verbindungsteilen **7** die Ladung **2** ebenfalls an der Oberseite **4** der Trennebene **3** arretiert beziehungsweise fixiert. Jedoch ist dort jeweils das volumenveränderbare Ausdehnungselement **8** an der Unterseite **5** der Trennebene **3** angeordnet. In diesen Ausführungsbeispielen ist das Ausdehnungselement **8** nicht kissenartig, wie in der **Fig. 2****,** ausgebildet, sondern besitzt eine langgestreckte Form, ähnlich einem Balken.

Das jeweilige biegeschlaffe Anschlagmittel **6** ist unterhalb der Trennebene **3** an dem Transportmittel **20** angeordnet, **Fig. 3****.** Die Ladung **2** ist auf einem Ladungsträger, im Ausführungsbeispiel eine bekannte Palette **22,** gelegen. An der Palette **22** verläuft sodann die Trennebene **3.**

In **Fig. 4** ist das biegeschlaffe Anschlagmittel **6** an dem volumenveränderbaren Ausdehnungselement **8** selbst unterhalb der Trennebene **3** und unter dem Ladeboden **21** des Transportmittels **20** angeschlagen, sodass das funktionsgemäß an der Ladung **2** angeordnete biegeschlaffe Anschlagmittel **6** durch eine Expansion des volumenveränderbaren Ausdehnungselements **8** mit einer Vorspannkraft beaufschlagt wird. Das volumenveränderbare Ausdehnungselement **8** erzeugt dabei einen expansiven Druck auf der Unterseite **5** der Trennebene **3,** wodurch das biegeschlaffe Anschlagmittel **6** gespannt und so die Ladung **2** arretiert wird.

Weiter ist in **Fig. 4** das biegeschlaffe Anschlagmittel **6** an freien Enden **15** des volumenveränderbaren Ausdehnungselements **8** an diesem angeschlagen. Dabei überragt das volumenveränderbare Ausdehnungselement **8** die Ladung **2** und das Transportmittel **20** mit dem Ladeboden **21** unterhalb der Trennebene **3.** Das biegeschlaffe Anschlagmittel **6** ist an überragenden Bereichen **16** des volumenveränderbaren Ausdehnungselements **8** an diesem angeschlagen.

Dabei gewährt, wie in allen Varianten, die physische Trennebene **3** an der Oberseite **4** eine Auflagefläche der Ladung **2** und an der Unterseite **5** eine Anlagefläche des jeweiligen volumenveränderbaren Ausdehnungselements **8.**

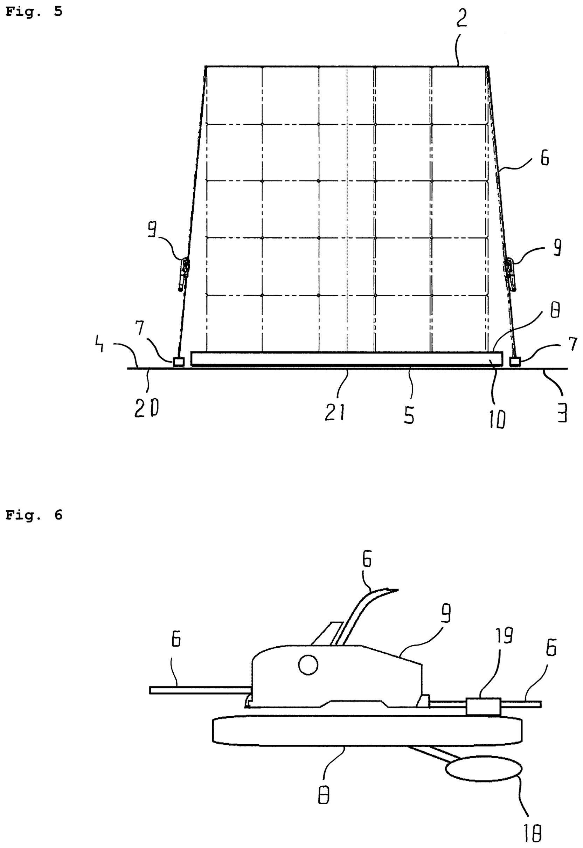

**Fig. 5** stellt eine weitere Darstellung einer Variante gemäß **Fig. 2** dar. Dabei arretiert ein biegeschlaffes Anschlagmittel **6** mit Verbindungsteilen **7** die Ladung **2** an der Oberseite **4** der Trennebene **3,** was im Allgemeinen einschließt, dass dies oberhalb der Trennebene **3** erfolgt. Das biegeschlaffe Anschlagmittel **6** mit zwei Arretiervorrichtungen **9** ist an der Trennebene **3,** im Ausführungsbeispiel ein Ladeboden **21** eines Transportmittels **20** angeschlagen. Das biegeschlaffe Anschlagmittel **6** kann so die Ladung **2** an der Trennebene **3** am Ladeboden **21** arretieren und damit fixieren, jedenfalls dann, wenn es in bekannter Weise mittels der beiden Arretiervorrichtungen **9** vorgespannt wird. Dabei ist das volumenveränderbare Ausdehnungselement **8** an der Oberseite **4** der Trennebene **3** und an der Ladung **2,** also zwischen dem Ladeboden **21** und der Ladung **2** angeordnet. Bei einer Expansion durch ein beispielhaftes Aufpumpen des volumenveränderbaren Ausdehnungselements **8** kann so das biegeschlaffe Anschlagmittel **6** entweder mit einer Vorspannung beaufschlagt werden, oder aber durch die Arretiervorrichtungen **9** kann eine bereits aufgebrachte Vorspannung durch das volumenveränderbare Ausdehnungselement **8** weiter bis zu einem Sollwert erhöht werden oder es kann so ein Nachspannen erfolgen.

**Fig. 6** stellt eine besondere Variante dar, da dort das volumenveränderbare Ausdehnungselement **8** direkt an dem biegeschlaffen Anschlagmittel **6** mittels eines Schlaufenelements **19,** das mit einem öffenbaren Verschluss, so beispielhaft ein Klettverschluss zum einfachen Wechsel des Ausdehnungselements **8,** versehen sein kann, angeordnet ist und unterhalb der Arretiervorrichtung **9,** im Ausführungsbeispiel ein Klemmschloss, belegen ist, sodass eine Ladung **2** nicht mit der Arretiervorrichtung **9** in Form des Klemmschlosses in Berührung kommt. Das volumenveränderbare Ausdehnungselement **8** kann so die Ladung **2** gegen Beschädigung schützen. Im Ausführungsbeispiel ist das volumenveränderbare Ausdehnungselement **8** ein mit Luft befüllbares Kissen mit einer Pumpe **18** mit einem Ablassventil. Im funktionsgemäßen Zustand kann das volumenveränderbare Ausdehnungselement **8** in Form des Kissens zwischen der Ladung **2** und der Arretiervorrichtung **9** liegen oder auch an einer anderen Stelle am biegeschlaffen Anschlagmittel **6** und der Ladung **2.** Wenn die Arretiervorrichtung **9** als Klemmschloss gespannt ist, kann mittels der Bedienung der Pumpe **18** das volumenveränderbare Ausdehnungselement **8** aufgepumpt werden, sodass sich die Vorspannkraft erhöht. Dieser Vorgang kann auch während eines Transports durchgeführt werden, sodass das biegeschlaffe Anschlagmittel **6** sogar nachgespannt werden kann. Das ist deswegen von Vorteil, da eine Betätigung der Arretiervorrichtung **9** an schwer zugänglichen Stellen oftmals unhandlich ist. Der Einsatz des volumenveränderbaren Ausdehnungselements **8** kann ein Nachspannen so erleichtern.

### Bezugszeichenliste

- 1.: Spannvorrichtung
- 2.: Ladung
- 3.: Trennebene
- 4.: Oberseite
- 5.: Unterseite
- 6.: Anschlagmittel
- 7.: Verbindungsteile
- 8.: Ausdehnungselement
- 9.: Arretiervorrichtung
- 10.: Gehäuse
- 11.: Gehäuseelemente
- 12.: Kernelement
- 13.: Beschichtung
- 14.: Anschlagpunkte
- 15.: freie Enden
- 16.: überragender Bereich
- 17.: Luftkissen
- 18.: Pumpe
- 19.: Schlaufenelement
- 20.: Transportmittel
- 21.: Ladeboden
- 22.: Palette

## Patentansprüche

1. Spannvorrichtung (1) zur Arretierung einer Ladung (2) an einer Trennebene (3) mit einer Oberseite (4) und einer Unterseite (5) und die Ladung (2) an der Oberseite (4) der Trennebene (3) anordenbar ist als Set,
- bestehend aus mindestens einem biegeschlaffen Anschlagmittel (6),
- mindestens zwei Verbindungsteilen (7), die jeweils an dem mindestens einen biegeschlaffen Anschlagmittel (6) angeordnet sind,
- und die Spannvorrichtung (1) mindestens ein volumenveränderbares Ausdehnungselement (8) aufweist.

2. Spannvorrichtung (1) nach Anspruch 1, wobei die Spannvorrichtung (1) eine Arretiervorrichtung (9) aufweist, welche an dem mindestens einen biegeschlaffen Anschlagmittel (6) angeordnet ist und wodurch die Länge des mindestens einen biegeschlaffen Anschlagmittels (6) veränderbar ist.

3. Spannvorrichtung (1) nach einem der Ansprüche 1 oder 2, wobei das mindestens eine volumenveränderbare Ausdehnungselement (8) ein regulierbares pneumatisches, hydraulisches oder mechanisches Element ist, so zum Beispiel ein volumenveränderbares Luftkissen (17), dessen Volumen durch eine Änderung dessen Innendrucks regulierbar ist.

4. Spannvorrichtung (1) nach einem der vorherigen Ansprüche, wobei das mindestens eine volumenveränderbare Ausdehnungselement (8) an dem mindestens einen biegeschlaffen Anschlagmittel (6) lastseitig angeordnet werden kann.

5. Spannvorrichtung (1) nach einem der vorherigen Ansprüche, wobei das mindestens eine volumenveränderbare Ausdehnungselement (8) ein Luftkissen (17) ist, das eine Vorrichtung zum Erhöhen oder Reduzieren des Luftkisseninnendrucks aufweist und ein Schlaufenelement (19) zur lastseitigen Anordnung des Ausdehnungselements (8) an dem mindestens einen biegeschlaffen Anschlagmittel (6) besitzt.

6. Spannvorrichtung (1) nach einem der vorherigen Ansprüche, wobei das mindestens eine Ausdehnungselement (8) ein volumenveränderbares Kernelement (12) aufweist, das von einem Gehäuse (10) umgeben ist.

7. Spannvorrichtung (1) nach Anspruch 6, wobei das Gehäuse (10) ineinandergreifende und relativ zueinander verschiebbare Gehäuseelemente (11) sind, wie beispielhaft starre Profile.

8. Spannvorrichtung (1) nach einem der Ansprüche 6 oder 7, wobei das Gehäuse (10) außenseitig eine rutschhemmende Beschichtung (13) aufweist.

9. Spannvorrichtung (1) nach einem der vorherigen Ansprüche, wobei das mindestens eine Ausdehnungselement (8) balkenartig ausgebildet ist.

10. Spannvorrichtung (1) nach einem der vorherigen Ansprüche, wobei das mindestens eine Ausdehnungselement (8) mindestens zwei Anschlagpunkte (14) aufweist, um das mindestens eine biegeschlaffe Anschlagmittel (6) an die Anschlagpunkte (14) anschlagen zu können.

11. Spannvorrichtung (1) nach Anspruch 10, wobei mindestens ein Anschlagpunkt (14) an dem mindestens einen Ausdehnungselement (8) im Bereich von freien Enden (15) angeordnet ist.

12. Anordnung einer Spannvorrichtung (1) gemäß einer der Ansprüche 1 bis 11 zur Arretierung einer Ladung (2) an einer Trennebene (3) mit einer Oberseite (4) und einer Unterseite (5) und die Ladung (2) an der Oberseite (4) der Trennebene (3) angeordnet ist,
- das mindestens eine biegeschlaffe Anschlagmittel (6) mit der optionalen Arretiervorrichtung (9) und den Verbindungsteilen (7) die Ladung (2) an der Oberseite (4) der Trennebene (3) arretiert,
- wobei das mindestens eine Ausdehnungselement (8) an der Oberseite (4) der Trennebene (3) und der Ladung (2) angeordnet oder das mindestens eine Ausdehnungselement (8) an dem mindestens einen biegeschlaffen Anschlagmittel (6) und der Ladung (2) derart angeordnet ist,
- dass das an der Ladung (2) angeordnete mindestens eine biegeschlaffe Anschlagmittel (6) durch eine Expansion des mindestens einen Ausdehnungselements (8) mit einer Vorspannkraft beaufschlagt werden kann oder die durch die Arretiervorrichtung (9) aufgebrachte Vorspannkraft dadurch erhöht werden kann.

13. Anordnung einer Spannvorrichtung (1) gemäß einer der Ansprüche 1 bis 11 zur Arretierung einer Ladung (2) an einer Trennebene (3) mit einer Oberseite (4) und einer Unterseite (5) und die Ladung (2) an der Oberseite (4) der Trennebene (3) angeordnet ist, wobei
- das mindestens eine biegeschlaffe Anschlagmittel (6) mit der optionalen Arretiervorrichtung (9) und den Verbindungsteilen (7) die Ladung (2) an der Oberseite (4) der Trennebene (3) arretiert,
- das mindestens eine volumenveränderbare Ausdehnungselement (8) an der Unterseite (5) der Trennebene (3) angeordnet ist,
- das mindestens eine biegeschlaffe Anschlagmittel (6) unterhalb der Trennebene (3) an dem Transportmittel (20) oder an dem mindestens einen volumenveränderbaren Ausdehnungselement (8) derart angeschlagen ist,
- dass das an der Ladung (2) angeordnete mindestens eine biegeschlaffe Anschlagmittel (6) durch eine Expansion des mindestens einen Ausdehnungselements (8) mit einer Vorspannkraft beaufschlagt werden kann oder die durch die Arretiervorrichtung (9) aufgebrachte Vorspannkraft so erhöht werden kann.

14. Anordnung der Spannvorrichtung (1) nach Anspruch 13, wobei das mindestens eine biegeschlaffe Anschlagmittel (6) an freien Enden (15) des mindestens einen volumenveränderbaren Ausdehnungselements (8) an diesem angeschlagen ist.

15. Anordnung der Spannvorrichtung (1) nach einem der Ansprüche 13 oder 14, wobei das mindestens eine volumenveränderbare Ausdehnungselement (8) die Ladung (2) unterhalb der Trennebene (3) oder unterhalb des Ladebodens (21) überragt und das mindestens eine biegeschlaffe Anschlagmittel (6) an überragenden Bereichen (16) des mindestens einen Ausdehnungselements (8) an diesem angeschlagen ist.

16. Anordnung einer Spannvorrichtung (1) nach einem der Ansprüche 1 bis 5, wobei das volumenveränderbare Ausdehnungselement (8) bei funktionsgemäßer Anordnung der Spannvorrichtung (1) an eine Ladung (2) lastseitig an der Arretiervorrichtung (9) anliegt.

17. Verfahren zur Anordnung einer Spannvorrichtung (1) gemäß einer der Ansprüche 1 bis 11 zur Arretierung einer Ladung (2) an einer Trennebene (3) mit einer Oberseite (4) und einer Unterseite (5) und die Ladung (2) an der Oberseite (4) der Trennebene (3) angeordnet ist, wobei
- erstens das mindestens eine biegeschlaffe Anschlagmittel (6) mit der Ladung (2) in Wirkverbindung gebracht wird, sodass das mindestens eine biegeschlaffe Anschlagmittel (6) die Ladung (2) an der Oberseite (4) der Trennebene (3) arretieren kann und
- dabei das mindestens eine biegeschlaffe Anschlagmittel (6) an der Oberseite (4) der Trennebene (3) oder an einer oder mehreren der Trennebene (3) angrenzenden Flächen angeschlagen wird,
- das mindestens eine volumenveränderbare Ausdehnungselement (8) vor oder nach dem ersten Schritt zwischen der Oberseite (4) der Trennebene (3) und der Ladung (2) angeordnet oder das mindestens eine Ausdehnungselement (8) zwischen dem mindestens einen biegeschlaffen Anschlagmittel (6) und der Ladung (2) angeordnet wird,
- sodann das mindestens eine Ausdehnungselement (8) betätigt wird, sodass es expandiert und es dadurch auf das mindestens eine biegeschlaffe Anschlagmittel (6) eine Kraftwirkung ausübt und so eine Vorspannung des mindestens einen biegeschlaffen Anschlagmittels (6) erzeugt oder erhöht wird.

18. Verfahren zur Anordnung einer Spannvorrichtung (1) gemäß einer der Ansprüche 1 bis 11 zur Arretierung einer Ladung (2) an einer Trennebene (3) mit einer Oberseite (4) und einer Unterseite (5) und die Ladung (2) an der Oberseite (4) der Trennebene (3) angeordnet ist, wobei
- erstens das mindestens eine biegeschlaffe Anschlagmittel (6) mit der Ladung (2) in Wirkverbindung gebracht wird, sodass das mindestens eine biegeschlaffe Anschlagmittel (6) die Ladung (2) an der Oberseite (4) der Trennebene (3) arretieren kann,
- das mindestens eine volumenveränderbare Ausdehnungselement (8) vor oder nach dem ersten Schritt an der Unterseite (5) der Trennebene (3) angeordnet wird,
- das mindestens eine biegeschlaffe Anschlagmittel (6) unterhalb der Trennebene (3) an dem Transportmittel (20) oder an dem mindestens einen volumenveränderbaren Ausdehnungselement (8) angeschlagen wird,
- sodann die Ladung (2) mit dem mindestens einen biegeschlaffen Anschlagmittel (6) arretiert wird und
- das mindestens eine volumenveränderbare Ausdehnungselement (8) betätigt wird, sodass es expandiert und dadurch auf das mindestens eine biegeschlaffe Anschlagmittel (6) eine Kraftwirkung ausgeübt wird und so eine Vorspannung des mindestens einen biegeschlaffen Anschlagmittels (6) erzeugt oder erhöht wird.
